# EUROPEAN PATENT APPLICATION

(11) **EP 2 465 826 A1**
(43) Date of publication of application: **20.06.2012**
(21) Application number: 10194829.7
(22) Date of filing: 14.12.2010
(51) Int. Cl.: C02F 11/12, C02F 1/00

(54) **An arrangement and a method for filtrating a rough-filtrated sludge**

(71) Applicant: Biotain AB, 262 73 Ängelholm (SE)
(72) Inventor: Broberg, Jan, SE-254 51, HELSINGBORG (SE)
(74) Representative: Olsson, Jan

(57) **Abstract**

An arrangement for filtrating a rough-filtrated sludge comprises a filter body (1) with a tubular shape and a casing (2) receiving said filter body therein while forming a filter space (3) separating circumferential walls of the casing from the filter body. The casing and the filter body are arranged with their circumferential walls directed substantially vertically. Said sludge is fed from below through a bottom of the casing into said filter space. The gravitation is utilized for obtaining passing of liquid substance of the sludge through the filter body into a central space of the casing and out through the bottom of the casing.

## Description

### TECHNICAL FIELD OF THE INVENTION AND BACKGROUND ART

The present invention relates to an arrangement for filtrating a rough-filtrated sludge comprising
- a filter body having at least one filter surface configured to filter a said sludge by retaining particles of the sludge thereonto and letting liquid substance of the sludge pass through, and
- means configured to feed a said sludge to be filtered onto said at least one filter surface,
as well as a method according to the preamble of the appended independent method claim.

The invention relates to such an arrangement for filtrating a rough-filtrated sludge of any conceivable type, but a sludge in the form of cattle droppings and a sewage sludge may be mentioned as typical examples without restricting the invention thereto. The invention also covers filtrating arrangements of this type which may be used where such arrangements have so far not been used, such as in connection with dwelling houses for taking care of sewage from water closets.

"Rough-filtrated" is here to be interpreted broadly, and said sludge does not have to have been subjected to an extensive filtration before arriving to said arrangement, but said rough-filtration may be as simple as removal of larger objects from the sludge, such as in said theoretical field of use in dwelling houses, tampons and cotton buds, by making the sludge to pass a net with coarse meshes.

Such an arrangement is used for taking care of the content of a said sludge and the object of such an arrangement may vary a lot. This object may be to remove something from the sludge, so that the liquid substance thereof may be more efficiently treated in any way for taking care of the content thereof. The main object of an arrangement of this type may also be to obtain retention of particles and removal thereof from said liquid substance for taking care of these particles. This may for instance be for utilizing these as a biomass for combustion or gasification or as a substrate for production of biogas or as a fertilizer.

Filtering carried out in known arrangements of this type normally involves pressing of said rough-filtrated sludge against said filter surface, so that liquid substance as well as small solid particles of the sludge will pass therethrough. Such pressing is for instance obtained by rotating said filter body and by that exerting the sludge to centrifugal forces.

Although such a procedure may be efficient with respect to separating particles from liquid substance of a sludge there is still a disadvantage that small solid particles are following the liquid substance through the filter surface. This may require additional treatment of the liquid substance for a subsequent use thereof and the loss of some of the particles which theoretically otherwise had been taken care of. Furthermore, known arrangements of this type are complicated to the construction and by that costly.

### SUMMARY OF THE INVENTION

The object of the present invention is to provide an arrangement and a method of the type defined in the introduction being improved in at least some aspect with respect to such arrangements and methods already known.

This object is according to the invention obtained by providing such an arrangement, which is characterized in that
- said filter body has a tubular shape,
- the arrangement comprises a casing configured to receive said filter body therein while forming a filter space separating circumferential walls of the casing from the filter body,
- said casing and said filter body are configured to be arranged with their circumferential walls directed substantially vertically,
- said means is configured to feed said sludge to be filtered from below through a bottom of said casing into said filter space, and
- the gravitation is utilized for obtaining passing of said liquid substance of the sludge through said filter surface of the filter body into a central space of the casing surrounded by the filter body and out through said bottom of the casing.

Such an arrangement is remarkably simple to the construction and may by that be obtained to a low cost and have a very reliable function. It will in spite of that enable a very efficient filtering of a said rough-filtrated sludge, especially by the fact that the gravitation is utilized for obtaining passing of the liquid substance of the sludge through said filter surface of the filter body, which is obtained by arranging said casing and the filter body with their circumferential walls directed substantially vertically, so that the sludge will try to escape said filter space through said filter surface for reducing the potential energy thereof.

Although such an arrangement is well suited to be used in plants for production of biogas or in water cleaning plants it may thanks to the simplicity combined with the high efficiency thereof advantageously be arranged in connection with dwelling houses to take care of sewage from water closets already in that area. According to an embodiment of the invention said casing and said filter body are arranged to form an annular said space, which has a positive influence upon the efficiency and the capacity of the filtering of such an arrangement.

According to another embodiment of the invention said filter body and/or said casing have a substantially circular cross-section. Such a cross-section means that no edges or corners to which particles may stuck and disturb the filter function will be there.

According to another embodiment of the invention said filter body is co-axially received in said casing.

According to another embodiment of the invention the arrangement comprises means configured to spray liquid onto said filter surface from said central space of the casing for cleaning said filter surface. Spraying of such a liquid from the interior of the filter body onto said filter surface will both prevent obstruction of areas of the filter surface and promote passing of liquid substance through the filter surface by capillary effects.

According to another embodiment of the invention said spraying means has a plurality of nozzles located substantially at a vertical centre axis of the casing and configured to spray liquid in substantially uniformly circumferentially distributed directions onto the inner surface of said filter body. Such an arrangement of nozzles will result in a favourable function of said spraying means.

According to another embodiment of the invention said nozzles are arranged on a pipe extending substantially along said centre axis of the casing, and the arrangement comprises means configured to rotate said pipe while spraying said liquid through said nozzles onto the filter body. This is a preferred way of realizing the advantageous spraying of liquid in substantially uniformly circumferentially distributed directions onto the inner surface of the filter body.

According to another embodiment of the invention said spraying means is configured to spray liquid deriving from said liquid substance obtained by passing through said filter surface of the filter body from said central space onto said filter surface. It is preferred to utilize said liquid substance already obtained as liquid to be sprayed by said spraying means.

According to another embodiment of the invention the arrangement comprises means configured to detect if a determined height has been reached by sludge particles retained in said filter space and send information thereabout to a member configured to control said feeding means to stop feeding a said sludge into said filter space when said determined height has been reached. Thus, it is by this ensured that feeding of sludge to said filter space is stopped before the filtering function of the arrangement gets inefficient, so that the particles retained on the filter surface of the filter body may be removed therefrom for enabling subsequent efficient filtering again, which is subject of another embodiment of the invention.

According to another embodiment of the invention the arrangement comprises means configured to spray a liquid onto said filter surface once said retained sludge particles have been removed from said filter space for cleaning said filter surface for obtaining an optimum filtering capacity of the arrangement again.

According to another embodiment of the invention the arrangement comprises a device configured to create a negative gas pressure inside said casing for withdrawal of gas contained in said sludge through a top wall of the casing. This means that gas contained in said sludge may be separated from said liquid substance and be taken care of.

According to another embodiment of the invention said filter space has a thickness of 2-20 cm, 3-10 cm or 4-8 cm, which are suitable thicknesses or depths in the horizontal direction of said filter space.

According to another embodiment of the invention said filter surface has filter openings with a diameter of 1 µm - 200 µm, 2 µm - 100 µm, or 10 µm - 70 µm. "Diameter" is here to be interpreted broadly, and it is not necessary that the openings or apertures of the filter surface are circular and the diameter is otherwise defined as the largest distance between two opposite borders of such an opening. The diameter chosen for said filter openings will depend upon the intended use of the arrangement.

The invention also relates to a method for filtrating a rough-filtrated sludge according to the appended independent method claim. The advantageous features and advantages of such a method appear clearly from the above discussion of the arrangement according to the present invention.

The invention also relates to a use of an arrangement according to the invention for filtrating a rough-filtrated sludge emanating from cattle droppings or sewage sludge, such as in connection with dwelling houses.

Further advantages as well as advantageous features of the invention will appear from the following description of an embodiment of the invention.

### BRIEF DESCRIPTION OF THE DRAWINGS

With reference to the appended drawings, below follows a specific description of an embodiment of the invention cited as an example.

In the drawings:
- Fig 1: is a simplified perspective view from below of an arrangement according to an embodiment of the present invention,
- Fig 2: is a simplified perspective view from above of the arrangement shown in Fig 1,
- Fig 3: is a schematic view from above of a part of the arrangement shown in Fig 1, and
- Fig 4: is a simplified, partially sectioned side elevation view of a part of the arrangement shown in Fig 1.

### DETAILED DESCRIPTION OF AN EMBODIMENT OF THE INVENTION

An arrangement for filtrating a rough-filtrated sludge is schematically illustrated in the appended Figures and will now be described while at the same time making reference to all these Figures. The arrangement has a filter body 1 with a tubular shape and a circular cross-section. The filter body is made of a net with a mesh size of 1 µm - 200 µm. The filter body is received in a casing 2 with a circular cross-section and co-axially arranged with respect to the filter body while forming a filter space 3 therebetween. The thickness of this filter space defined by circumferential walls 4 of the casing and the filter surface 5 of the filter body is typically 3-10 cm.

The casing and the filter body are configured to be arranged with their centre axis extending substantially vertically. Said filter space 3 is at one end closed by a bottom 6 of the casing and at the other of a top wall 7 of the casing. Diameter and height of the filter body and casing are typically about 1 m and 1.5 m, respectively, but may have any values suitable for the intended use.

The casing with the filter body is arranged on a frame 8 to be resting on the ground, such as the floor in a room.

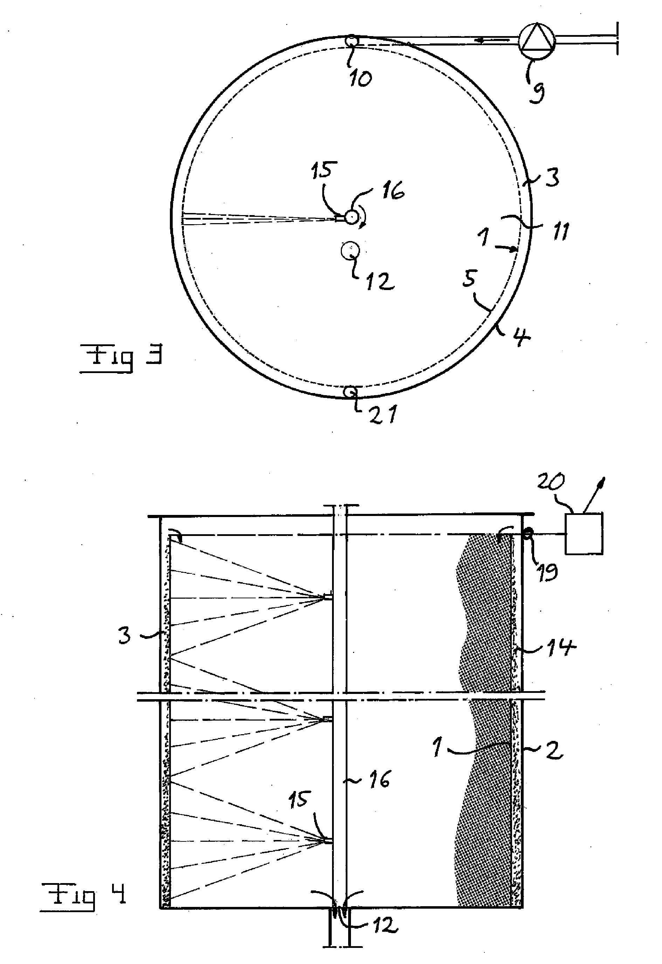

The arrangement also comprises means illustrated by a pump 9 configured to feed a sludge to be filtered from below through a hole 10 in the bottom of the casing into said filter space 3 (see Fig 3). This sludge should be rough-filtrated in the sense mentioned in the introduction and may be of any conceivable type and is here to be considered to emanate from cattle droppings or sewage sludge from water closets. This means that liquid substance of the sludge will by the gravitation pass through the filter surface 5 of the filter body into a central space 11 of the casing surrounded by the filter body and out through an opening 12 in the bottom 6 of the casing for being collected in a container 13. Sludge particles 14 being too large for passing through the filter body will be retained on the filter surface, and such particles are schematically illustrated in Fig 4.

The level of the sludge particles inside the filter surface will gradually increase, since the height to which the filter surface will be obstructed by sludge particles retained thereon will gradually increase.

The arrangement is also provided with a plurality of nozzles 15 arranged on a pipe 16 extending substantially along the centre axis of the casing. Means 17 are configured to feed a liquid to said nozzles for being sprayed onto the filter surface from the centre space of the casing for cleaning the filter surface. This may be done by spraying liquid deriving from the liquid substance obtained by passing through said filter surface of the filter body. The arrangement comprises means in the form of a motor 18 configured to rotate the pipe 16 while spraying the liquid through the nozzles onto the filter body, so that the liquid will in this way be sprayed in substantially uniformly circumferentially distributed directions onto the inner surface of the filter body. This spraying facilitates the passing of clean liquid through the filter surface by capillary action.

The arrangement has also means 19 (see Fig 4) configured to detect if a determined height has been reached by sludge particles 14 retained in the filter surface 3 and send information thereabout to a member 20 configured to control the feeding means 9 to stop feeding a said sludge into the filter space when this determined height has been reached. The arrangement has means schematically indicated by a hole 21 in the bottom of the casing configured to enable removal of the retained particles after said stop of the feeding of the sludge to the filter space. The filter will after such removal be cleaned by spraying through the nozzles, whereupon the pump 9 may be controlled to start to feed a said sludge to the filter surface again for filtrating thereof. It is shown that the arrangement also has means 22 for pumping the liquid collected in the container 13 away therefrom for further treatment or for being used in the spraying action of the nozzles 15.

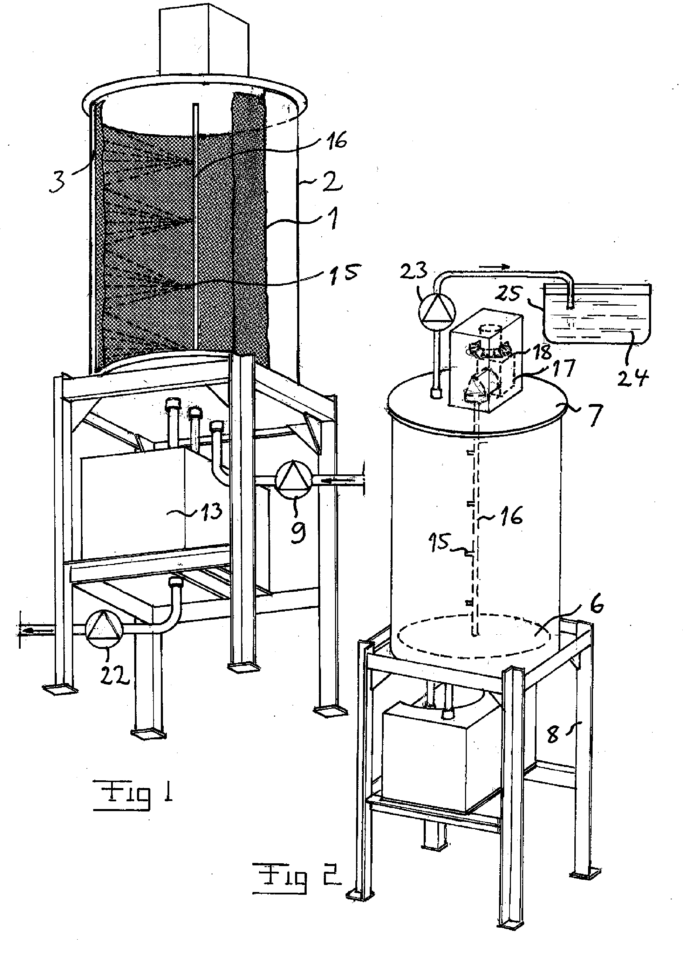

It is shown in Fig 2 how the arrangement may also have means 23, such as a fan, configured to create a negative gas pressure inside the casing 2 for removal of gas contained in the sludge through a top wall 7 of the casing. This gas may then be conducted into a solution 24 in a vessel 25 for taking care thereof.

The invention is of course not in any way restricted to the embodiments thereof described above, but many possibilities to modifications thereof will be apparent to a person with ordinary skill in the art without departing from the scope of the invention as defined in the appended claims.

It is of course possible that the arrangement has no means for withdrawal of gas from said sludge, especially if the arrangement is used on a spot in a sludge treating cycle where the sludge is not prepared for that yet.

## Claims

1. An arrangement for filtrating a rough-filtrated sludge comprising
• a filter body (1) having at least one filter surface (5) configured to filter a said sludge by retaining particles of the sludge thereonto and letting liquid substance of the sludge pass through, and
• means (9) configured to feed a said sludge to be filtered onto said at least one filter surface,
**characterized in that**
• said filter body (1) has a tubular shape,
• the arrangement comprises a casing (2) configured to receive said filter body therein while forming a filter space (3) separating circumferential walls (4) of the casing from the filter body,
• said casing and said filter body are configured to be arranged with their circumferential walls directed substantially vertically,
• said means (9) is configured to feed said sludge to be filtered from below through a bottom (6) of said casing into said filter space (3), and
• the gravitation is utilized for obtaining passing of said liquid substance of the sludge through said filter surface (5) of the filter body (1) into a central space (11) of the casing surrounded by the filter body and out through said bottom of the casing.

2. An arrangement according to claim 1, **characterized in that** said casing (2) and said filter body (1) are arranged to form an annular said filter space (3).

3. An arrangement according to claim 1 or 2, **characterized in that** said filter body (1) and/or said casing (2) have a substantially circular cross-section.

4. An arrangement according to any of claims 1-3, **characterized in that** said filter body (1) is coaxially received in said casing (2).

5. An arrangement according to any of the preceding claims, **characterized in that** it comprises means (15, 16) configured to spray a liquid onto said filter surface (5) from said central space (11) of the casing (2) for cleaning said filter surface.

6. An arrangement according to claim 5, **characterized in that** said spraying means (15, 16) has a plurality of nozzles (15) located substantially at a vertical centre axis of the casing (2) and configured to spray liquid in substantially uniformly circumferentially distributed directions onto the inner surface of said filter body (1).

7. An arrangement according to claim 6, **characterized in that** said nozzles (15) are arranged on a pipe (16) extending substantially along said centre axis of the casing, and that the arrangement comprises means (18) configured to rotate said pipe while spraying said liquid through said nozzles onto the filter body (1).

8. An arrangement according to any of claims 5-7, **characterized in that** said spraying means (15, 16) is configured to spray liquid deriving from said liquid substance obtained by passing through said filter surface (5) of the filter body (1) from said central space (11) onto said filter surface.

9. An arrangement according to any of the preceding claims, **characterized in that** it comprises means (19) configured to detect if a determined height has been reached by sludge particles (14) retained in said filter space (3) and send information thereabout to a member (20) configured to control said feeding means (9) to stop feeding a said sludge into said filter space when said determined height has been reached.

10. An arrangement according to claim 9, **characterized in that** it comprises means (21) configured to enable removal of said retained particles (14) after said stop of said feeding of sludge to said filter space (3).

11. An arrangement according to claim 10, **characterized in that** it comprises means (15, 16) configured to spray a liquid onto said filter surface once said sludge particles (14) retained have been removed from said filter space (3) for cleaning said filter surface (5).

12. An arrangement according to any of the preceding claims, **characterized in that** it comprises a device (23) configured to create a negative gas pressure inside said casing (2) for removal of gas contained in said sludge through a top wall (7) of the casing.

13. An arrangement according to any of the preceding claims, **characterized in that** said filter space (3) has a thickness of 2-20 cm, 3-10 cm or 4-8 cm.

14. An arrangement according to any of the preceding claims, **characterized in that** said filter surface (5) has filter openings with a diameter of 1 µm - 200 µm, 2 µm - 100 µm, or 10 µm - 70 µm.

15. A method for filtrating a rough-filtrated sludge comprising the steps of feeding a rough-filtrated sludge onto at least one filter surface (5) of a filter body (1) and making liquid substance of the sludge to pass through the filter surface while retaining particles of the sludge thereonto, **characterized in that** said feeding is carried out by feeding said sludge into a filter space (3) separating circumferential walls (4) of a casing (2) configured to receive said filter body from the filter body having a tubular shape, in which said casing and said filter body are kept with their circumferential walls directed substantially vertically, said sludge to be filtered is fed from below through a bottom (6) of said casing into said filter space (3) and the gravitation is utilized for obtaining passing of said liquid substance of the sludge through said filter surface (5) of the filter body (1) into a central space (11) of the casing (2) surrounded by the filter body and out through said bottom (6) of the casing.

16. Use of an arrangement according to any of claims 1-14 for filtrating a rough-filtrated sludge emanating from cattle droppings or sewage sludge, such as in connection with dwelling houses.
